# EUROPEAN PATENT SPECIFICATION

(11) **EP 2 790 391 B1**
(45) Date of publication and mention of the grant of the patent: **28.12.2016**
(21) Application number: 14159614.8
(22) Date of filing: 13.03.2014
(51) Int. Cl.: H04M 1/725

(54) **Method and apparatus for displaying screen of portable terminal device**
Verfahren und Vorrichtung zum Anzeigen eines Bildschirms einer tragbaren Endgerätevorrichtung
Procédé et appareil d'affichage d'écran de dispositif de terminal portable

(30) Priority: 10.04.2013 KR 20130039153
(43) Date of publication of application: 15.10.2014
(73) Proprietor: Samsung Electronics Co., Ltd., Suwon-si Gyeonggi-do 443-742 (KR)
(72) Inventor: Won, Sung-Joon, Gyeonggi-do 443-742 (KR); Yang, Chang-Mo, Gyeonggi-do 443-742 (KR)
(74) Representative: Jenkins, Richard Gavin

(56) References cited:
- EP-A1- 1 429 544
- EP-A2- 2 360 902
- US-A1- 2008 211 813
- US-A1- 2009 098 911
- US-A1- 2012 133 790

## Description

### BACKGROUND OF THE INVENTION

### 1. Field of the Invention

The present invention relates generally to providing a display environment in which information is visualized so that users can view the information, and more particularly, to a method and an apparatus for displaying a screen of a portable terminal device due to an in-use environment of the portable terminal device.

### 2. Description of the Related Art

Presently, portable terminal devices such as smart phones, tablet PCs, Personal Digital Assistants (PDAs), and navigation systems are being used more frequently, and various services and additional functions are being developed and applied. For example, with regards to smart phones, functions such as schedule management, road locating, and Internet banking are being developed to be applied in the form of applications.

Meanwhile, with the recent developments in portable terminal devices, designs of graphic objects corresponding to visual elements such as backgrounds, icons, widgets, menus, and texts are considered important, in addition to external designs of the portable terminal devices. Further, when portable terminal devices are developed, designs of visual elements, technologies for reflecting in-use environments of the portable display devices, and displaying of the graphic objects on screens are considerations that are taken into account during development.

Conventional technologies related to a display of screens of portable terminal devices include Japanese Unexamined Patent Publication No. 2009-0204988 and Korean Unexamined Patent Publication No. 2011-0019861.

Japanese Unexamined Patent Publication No. 2009-0204988 discloses a technology for changing a display form of a display screen based on external environment information and obtaining a screen of a high visibility according to an in-use environment of a portable terminal device. Further, Korean Unexamined Patent Publication No. 2011-0019861 discloses a technology of changing standby screens of a user device and types and dispositions of icons constituting a screen according to various collected information such as times and locations.

Currently, studies on technologies for expressing in-use environments of portable terminal devices on screens of the portable terminal devices are continuously being conducted. Further, as the demands of users related to a display of graphic objects increase, studies on related technologies for developing more improved screen display technologies of portable display devices, reflecting in-use environments of the portable display devices are increasing.

Document US 2012/133790 discloses a mobile device configured to display an image, wherein characteristics of the displayed image may be modified based on identified characteristics of a relationship between the mobile device and its environment.

Document US 2008/211813 discloses a device and method for light and shade simulation in an augmented-reality system.

### SUMMARY OF THE INVENTION

There is provided a screen display method of a portable terminal device as set out in claim 1 and a screen display apparatus of a portable terminal device as set out in claim 7.

The present invention has been made to address at least the problems and disadvantages described above, and to provide at least the advantages described below. Accordingly, aspects of the present invention provide a screen display method and an apparatus for a portable terminal device for realistically displaying graphic objects such as a background, an icon, a widget, a menu, and a text, reflecting an in-use environment of the portable terminal device on a screen of the portable terminal device.

According to an aspect of the present invention, a screen display method of a portable terminal device is provided. The screen display method includes identifying direction information of the portable terminal device; and applying a graphic expression showing at least one of a preset shadowing effect and light reflecting effect, which are predefined in at least one object displayed on a screen, according to the identified direction information of the portable terminal device.

According to another aspect of the present invention, a screen display apparatus of a portable terminal device is provided. The screen display apparatus of the portable terminal device, includes a display configured to display at least one object; a direction detection sensor configured to detect direction information of the portable terminal device; and a controller configured to control the display and the direction detection sensor to control application of a graphic expression showing at least one of a preset shadowing effect and light reflecting effect in at least one object displayed on the display according to the direction information.

### BRIEF DESCRIPTION OF THE DRAWINGS

The above and other aspects, features, and advantages of the present invention will be more apparent from the following detailed description taken in conjunction with the accompanying drawings, in which:
FIG. 1 shows a block diagram of a portable terminal device that is configured to perform a screen display operation according to an embodiment of the present invention;
FIG. 2 shows an example of an image of an icon to which a light reflecting and shadowing effect is applied as the screen display operation according to an embodiment of the present invention is performed;
FIGS. 3A-3E show examples of images of icons to which a light reflecting and shadowing effect is applied depending on directions of light according to an embodiment of the present invention;
FIG. 4 shows a flowchart illustrating the screen display operation according to an embodiment of the present invention;
FIGS. 5A-5C show examples of images of icons to which a light reflecting and shadowing effect is applied depending on information indicating directions in which a portable terminal device faces according to an embodiment of the present invention; and
FIGS. 6A and 6B show examples of images of icons to which a light reflecting and shadowing effect is applied depending on information indicating directions in which a portable terminal device faces and postures of the portable terminal device according to an embodiment of the present invention.

### DETAILED DESCRIPTION OF EMBODIMENTS OF THE PRESENT INVENTION

Hereinafter, embodiments of the present invention will be described in detail with reference to the accompanying drawings. In the following description, detailed titles such as a geomagnetic sensor, a gyro sensor, and a graphic expression, and specific items such as constituent elements are described, but it will be apparent to those skilled in the art to which the present invention pertains that they are provided only to help a general understanding of the present invention and the specific items can be changed and modified without departing from the scope of the present invention.

As described above, an in-use environment of the portable terminal device can be displayed on a screen of the portable terminal device, by using the screen display method and apparatus of the portable terminal device. In more detail, a light reflecting effect and a shadowing effect can be displayed on a graphic object such as a background, an icon, a widget, a menu, and a text, considering a north, east, south or west direction towards which the portable terminal device faces and a posture of the portable terminal device such as whether the portable terminal is laid down or is held upright, and the light reflecting effect and the shadowing effect can be automatically changed according to the direction and posture of the portable terminal device.

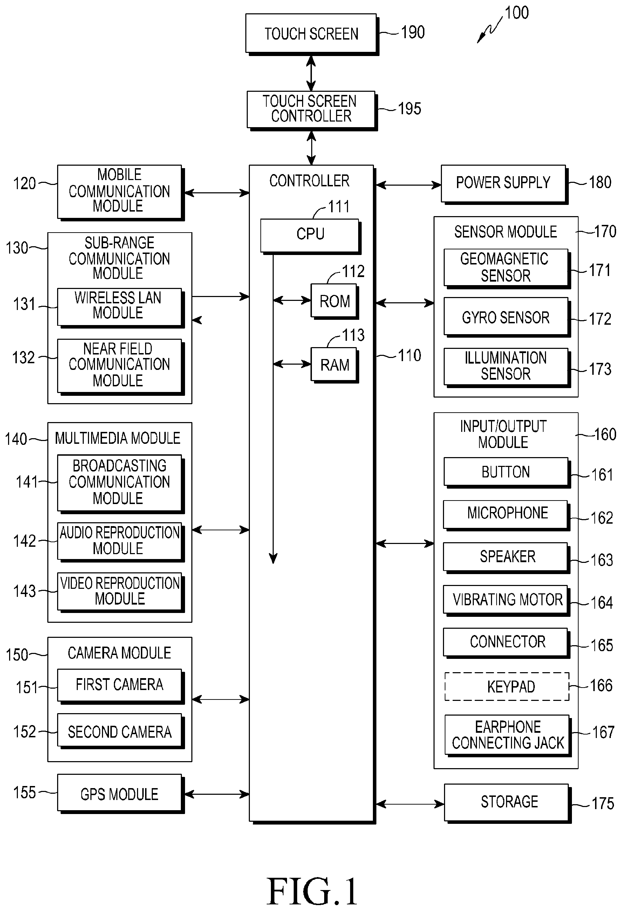

FIG. 1 shows a block diagram of a portable terminal device such as, for example, a smart phone, for performing a screen display operation according to an embodiment of the present invention. Referring to FIG. 1, the portable terminal device 100 includes a display 190 (e.g., a touch screen 190) and a display controller 195 (e.g., a touch screen controller 195). Further, the portable terminal device 100 includes a controller 110, a mobile communication module 120, a sub-range communication module 130, a multimedia module 140, a camera module 150, a GPS module 155, an input/output module 160, a sensor module 170, a storage 175, and a power supply 180. The sub-range communication module 130 includes at least one of a wireless LAN module 131 and a near field communication module 132. The multimedia module 140 includes at least one of a broadcasting communication module 141, an audio reproduction module 142, and a video reproduction module 143. The camera module 150 includes at least one of a first camera 151 and a second camera 152. The input/output module 160 includes at least one button 161, a microphone 162, a speaker 163, a vibration motor 164, a connector 165, a keypad 166, and an earphone connecting jack 167. The sensor module 170 includes a direction detection sensor 171 (e.g., a geomagnetic sensor 171), a gyro sensor 172, and an illumination sensor 173.

Hereinafter, it will be exemplified that the display 190 and the display controller 195 will be referred to as a touch screen 190 and a touch screen controller 195, respectively. Further, it will also be exemplified that the direction detection sensor 171 will be referred to as a geomagnetic sensor 171.

The power supply 180 may supply electric power to one or more batteries (not shown) disposed in a housing of the portable terminal device 100 under the control of the controller 110. The one or more batteries (not shown) supply electric power to the portable terminal device 100. The power supply 180 may also supply electric power input from a power source (not shown) through a wire cable connected to the connector 165 to the portable terminal device 100. The power supply 180 may supply electric power wirelessly input from an external power source through a wireless communication charging technology to the portable terminal device 100.

The input/output module 160 may include at least one of a plurality of buttons 161, a microphone 162, a speaker 163, a vibration motor 164, a connector 165, and a keypad 166.

The button 161 may be provided on a front surface, a side surface, and/or a rear surface of the housing of the portable terminal device 100, and may include at least one of a power/lock button (not shown), a volume button (not shown), a menu button(not shown), a home button(not shown), a back button(not shown), and a search button(not shown).

The microphone 162 receives a voice or a sound to generate an electrical signal under the control of the controller 110.

The speaker 163 may output a sound corresponding to various signals (for example, a wireless signal, a broadcasting signal, a digital audio file, a digital video file, or photographing of a picture) of the mobile communication module 120, the sub-communication module 130, the multimedia module 140, or the camera module 150 to the outside under the control of the controller 110. The speaker 163 may output a sound (for example, a button press sound or a voice communication connection sound) corresponding to a function performed by the portable terminal device 100. One or more speakers 163 may be provided at a location or locations of the housing of the portable terminal device 100.

The vibration motor 164 may transform an electrical signal into mechanical vibrations under the control of the controller 110. For example, when receiving a voice communication from another device (not shown), the vibration motor 164 of the portable terminal device 100 is operated in a vibration mode. One or a plurality of vibration motors 164 may be provided in the housing of the portable terminal device 100. The vibration motor 164 may also be operated in response to a touch operation of the user by which the touch screen 190 is touched and a continuous movement of the touch on the touch screen 190.

The connector 165 may be used as an interface for connecting the portable terminal device 100 to an external device (not shown) or a power source (not shown). The portable terminal 100 may transmit data stored in the storage 175 of the portable terminal device 100 to an external device (not shown) or receive data from the external device (not shown) through a wire cable connected to the connector 165 under the control of the controller 110. Further, the portable terminal 100 may receive electric power from the power source (not shown) through a wire cable connected to the connector 165 or charge a battery (not shown) by using the power source.

The keypad 166 may receive a key input from the user under the control of the portable terminal device 100. The keypad 166 includes a physical keypad (not shown) provided in the portable terminal device 100 or a virtual keypad (not shown) displayed on the touch screen 190. The physical keypad (not shown) provided in the portable terminal device 100 may be excluded according to a performance or structure of the portable terminal device 100.

An earphone (not shown) may be connected into the earphone connecting jack 167 to be connected to the portable terminal device 100.

The camera module 150 may include at least one of the first camera 151 and the second camera 152 for photographing a still image or a video under the control of the controller 110.

The multimedia module 140 may include a broadcasting communication module 141, an audio reproduction module 142, or a video reproduction module 143. The broadcasting communication module 141 may receive broadcasting information (for example, a TV broadcasting signal, a radio broadcasting signal, or a data broadcasting signal) and additional broadcasting information (for example, Electronic Program Guide (EPS) or Electronic Service Guide (ESG)) transmitted from a broadcasting station through a broadcasting communication antenna (not shown) under the control of the controller 110. The audio reproduction module 142 may reproduce a digital audio file (for example, a file whose extension is mp3, wma, ogg, or wav) stored or received under the control of the controller 110. The video reproduction module 143 may reproduce a digital video file (for example, a file whose extension is mpeg, mpg, mp4, avi, mov, or mkv) stored or received under the control of the controller 110. The video reproduction module 143 may also reproduce a digital audio file.

The multimedia module 140 may also include just the audio reproduction module 142 and the video reproduction module 143 without the broadcasting communication module 141. Further, the audio reproduction module 142 or the video reproduction module 142 of the multimedia module 140 may be included in the controller 110.

The mobile communication module 120 connects the portable terminal device 100 to an external device through mobile communications by using at least one or more antennas (not shown) under the control of the controller 110. The mobile communication module 120 transmits and receives a wireless signal for a voice communication, a video communication, a Short Message Service (SMS), or a Multimedia Message Service (MMS) to and from a mobile phone (not shown), a smart phone (not shown), a tablet PC or another device (not shown) whose phone number is input to the portable terminal device 100. Further, the mobile communication module 120 connects to the wireless Internet or transmits and wirelessly receives a wireless signal to and from peripheral devices in a place where a wireless Access Point (AP) is installed through Wi-Fi or a 3G/4G data network under the control of the controller 110.

According to an aspect of the present invention, the mobile communication module 120 may transmit and receive a wireless signal to and from a server for providing weather information in real time to identify weather information of an area where the portable terminal device 100 is located. The weather information may include, for example, sunrise and sunset time information. The calculated location information of the portable terminal device 100 may be provided to the server for providing weather information through a GPS module 155, which will be described below.

The sub-communication module 130 may include at least one of a wireless LAN module 131 and a near field communication module 132.

The wireless LAN module 131 may be connected to the Internet in a place where a wireless Access Point (AP) (not shown) is installed under the control of the controller 110. The wireless LAN module 131 supports a wireless LAN standard (IEEE802.11x) of IEEE. The near field communication module 132 may perform a wireless near field communication between a portable terminal devices under the control of the controller 110.

The portable terminal device 100 may include at least one of the mobile communication module 120, the wireless LAN module 131, and the near field communication module 132 according to performance. For example, the portable terminal device 100 may include a combination of the mobile communication module 120, the wireless LAN module 131, and the near field communication module 132 according to performance.

The GPS module may receive electric waves from a plurality of GPS satellites (not shown) in orbit around the Earth, and may calculate a location of the portable terminal device 100 by using times of arrival between the GPS satellites (not shown) and the portable terminal device 100.

The sensor module 170 includes a geomagnetic sensor 171, a gyro sensor 172, and an illumination sensor 173. The geomagnetic sensor 171 detects directions of the portable terminal device 100, such as north, east, south, and west, by using the magnetic fields of the Earth, and the gyro sensor 172 calculates an angle by which an object is rotated about an axis in a unit time. The illumination sensor 173 detects an amount of peripheral light.

Additionally, the sensor module 170 may include a proximity sensor for detecting a proximity to the portable terminal device 100 of the user, a gravity sensor for detecting a direction of the gravity, and an altimeter for measuring the atmospheric pressure to detect an altitude.

The touch screen 190 receives a manipulation by the user, and may display an execution image, an operational state, and a menu state of an application program. That is, the touch screen 190 may provide the user with a user interface corresponding to various functionalities (for example, a voice communication, data transmission, broadcasting, and photographing a picture) of the portable terminal device 100. The touch screen 190 may transmit an analog signal corresponding to at least one touch input to the user interface to the touch screen controller 195. The touch screen 190 may receive at least one touch by a human body (for example, a finger) or a touchable input unit (for example, a stylus pen) such as an electronic pen. Further, the touch screen 190 may receive a continuous movement of a touch. The touch screen 190 may transmit an analog signal corresponding to a continuous movement of an input touch to the touch screen controller 195.

In the present invention, a touch is not limited to a direct contact between the touch screen 190 and a body of the user or a touchable input unit, and may include a non-contact. An interval detectable in the touch screen 190 may be changed according to a performance or structure of the portable terminal device 100. In particular, the touch screen 190 is configured such that, in order to detect a touch event due to a contact with a body of the user or a touchable input unit and an input event (for example, a hovering event) in a non-contact state after being classified, values (for example, current values) detected by the touch event and the hovering event can be differently output. The touch screen 190 may preferably output the detected values (for example, current values) differently according to a distance between a space where the hovering event is generated and the touch screen 190.

The touch screen 190 may be realized, for example, in a resistive method, a capacitive method, an infrared method, or an acoustic wave method.

The touch screen controller 195 transforms an analog signal received from the touch screen 190 into a digital signal (for example, X and Y coordinates) and transmits the digital signal to the controller 110. The controller 110 may control the touch screen 190 by using a digital signal received from the touch screen controller 195. For example, the controller 110 may select or execute a shortcut icon (not shown) displayed on the touch screen 190 in response to a touch event or a hovering event. Further, the touch screen controller 195 may be included in the controller 110.

The touch screen controller 195 may detect a value (for example, a current value) output through the touch screen 190 to identify a distance between a space where a hovering event is detected and the touch screen 190, and may transform the identified distance value into a digital signal (for example, a Z coordinate) to provide the digital signal to the controller 110.

The touch screen 190 may include at least two touch screen panels for detecting a touch or a proximity of a body of the user and the touchable input unit so that the inputs by the body of the user and the touchable input unit can be received at the same time. The at least two touch screen panels provide different output values to the touch screen controller 195, and the touch screen controller 195 recognizes the values input from the at least two touch screen panels to distinguish whether the input from the touch screen is an input by the body of the user or an input by the touchable input unit.

The storage 175 may store input/output signals or data corresponding to operations of the mobile communication module 120, the sub-range communication module 130, the multimedia module 140, the camera module 150, the GPS module 155, the input/output module 160, the sensor module 170, and the touch screen 190 under the control of the controller 110. The storage 175 may store a control program for controlling the portable terminal device 100 or the controller 110 and applications.

The term "storage" includes the storage 175, a ROM 112 in the controller 110, a RAM 113 or a memory card (not shown) (for example, an SD card and a memory stick) mounted in the portable terminal device 100. The storage may include a nonvolatile memory, a volatile memory, a Hard Disk Drive (HDD), or a Solid State Drive (SSD).

The controller 110 may include a CPU 111, the ROM 112 in which a control program for controlling the device 100 is stored, and the RAM 113 for storing a signal or data input from an external device (not shown) or used as a memory area for an operation performed by the device 100. The CPU 111 may include a single core, a dual core, a triple core, or a quad core processor. The CPU 111, the ROM 112, and the RAM 113 may be connected to each other through internal buses.

The controller 110 controls the mobile communication module 120, the sub-range communication module 130, the multimedia module 140, the camera module 150, the GPS module 155, the input/output module 160, the sensor module 170, the storage 175, the power supply 180, the touch screen 190, and the touch screen controller 195.

The controller 110 controls an application of a graphic expression showing at least one of a shadowing effect and a reflection effect, which are preset in at least one object displayed on the touch screen 190, in response to direction information of the portable terminal device 100 detected by the geomagnetic sensor 171, according to the control feature of the screen display operation of the present invention.

According to an aspect of the present invention, the controller 110 controls application of the graphic expression showing at least one of a shadowing effect and a light reflecting effect, which are preset in at least one object displayed on the touch screen 190, as a function of at least one of a current time, a rotation angle of the portable terminal device 100 calculated by the gyro sensor 172, sunrise and sunset times of an area where the portable terminal device 100 is located, the sunrise and sunset times being received through the mobile communication module 120, and current weather information of the area where the portable terminal device 100 is located. The current weather information is received through the mobile communication module 120, together with direction information of the portable terminal device 100 detected by the geomagnetic sensor 171.

Additionally, the controller 110 controls a change in the graphic expression based on an amount of peripheral light detected by the illumination sensor 173.

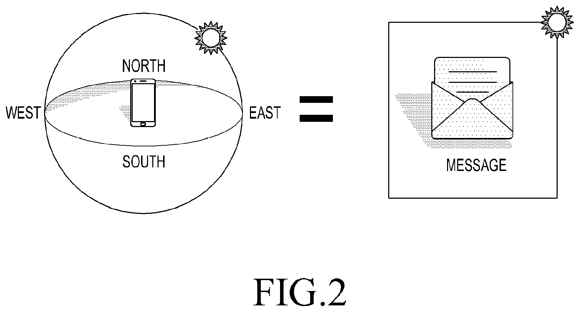

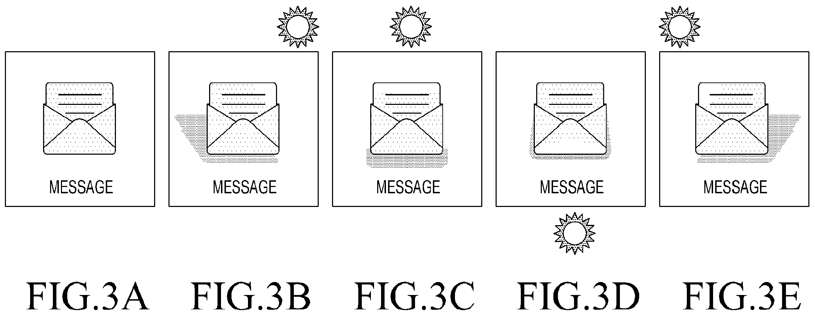

As shown in FIG. 2, the present invention detects the reflection of light and shadow of the mobile communication terminal created according to an incident direction of light to realistically display the light reflecting and shadowing effect on an icon displayed on the touch screen 190. In more detail, assuming that the location of the sun is fixed, as the detected direction of rays of light incident on the front surface of the icon changes as shown in FIG. 3 whenever the direction of the portable terminal device is changed to north, east, south, or west and the posture of the portable terminal device is changed (for example, the touch screen of the portable terminal device is parallel or perpendicular to the sky), a change of an application area of a light reflecting effect and a shadowing effect applied to the icon is displayed. Referring to FIG. 3A, it is evident that the light reflecting effect and the shadowing effect are not applied to the icon when sunlight is not detected. Referring to FIGS. 3B to 3E, it is evident that areas of the light reflecting effect and the shadowing effect applied to the icon are changed according to the location of the sun when the sunlight is detected. That is, referring to FIGS. 3B to 3E, the location of the sun relative to the portable terminal device 100 changes if the direction and posture of the portable terminal device 100 is changed, in which case it can be identified that the areas of the light reflecting effect and the shadowing effect applied to the icon are displayed differently.

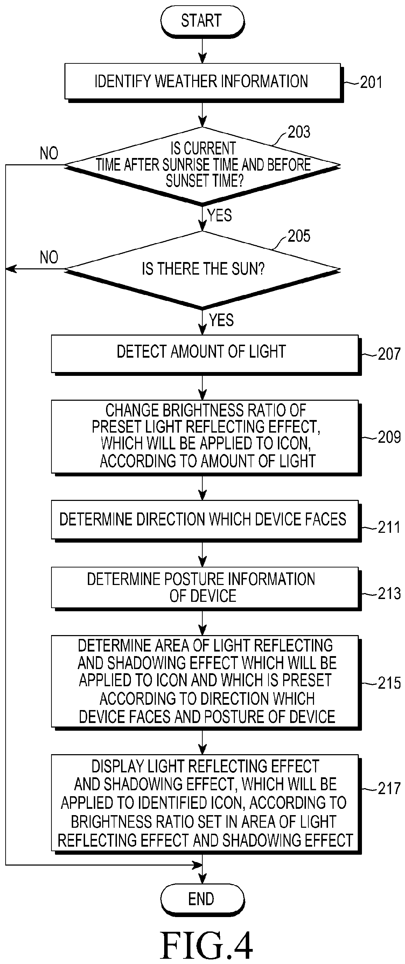

FIG. 4 shows a flowchart illustrating a screen display operation according to an embodiment of the present invention. Referring to FIG. 4, first, in step 201, received weather information is identified through transmission and reception of a wireless signal between the mobile communication module 120 of the portable terminal device 100 and a server for providing weather information. The identified weather information includes weather information of an area where the portable terminal device 100 is currently located, and sunrise and sunset time information. Specifically, a server for providing external weather information is accessed through the mobile communication module 120 in real time or at a preset time interval, and weather information of the area where the portable terminal device 100 is located, that is, weather information and sunrise and sunset time information, is requested after the location information of the portable terminal device 100 is received. The requested weather information and sunrise and sunset time information of the area is received from the server for providing the external weather information. The location information of the portable terminal device 100 may be determined using the GPS module 155.

In step 203, it is determined whether the current time is after the sunrise time and before the sunset time, according to the sunrise time and sunset time information identified in step 201. The operation of the present invention is only applied during the daytime when the sun is shining. If it is determined in step 203 that the current time is not after the sunrise time and before the sunset time, the operation of the present invention is ended. However, if it is determined in step 203 that the current time is after the sunrise time and before the sunset time, the step proceeds to step 205.

In step 205, it is determined whether the sun is shining in the identified weather information. This step is provided to prevent the operation of the present invention from being applied during a day when the sun is not shining, such as a cloudy or rainy day. If there is no sun in the weather information identified in step 201, the operation of the present invention is ended. However, if it is determined in step 205 that the sun is shining in the weather information identified in step 201, the step proceeds to step 207.

In step 207, an amount of peripheral light incident on the portable terminal device 100 is detected by the illumination sensor 173. Subsequently, in step 209, a brightness ratio of a light reflecting effect, which will be applied to the icon, is changed according to an amount of the detected peripheral light. The change of the brightness ratio corresponds to a change of a graphic expression, and, in more detail, at least one preset ratio of a color tone, a color, a vividness, and a transparency applied to a separate graphic layer or the same layer is changed.

In step 211, a direction towards which the portable terminal device 100 faces and which has been detected by the geomagnetic sensor 171 is determined. Assuming there are six direction sets in the portable terminal device 100 such as, for example, northeast, north, northwest, southeast, south, and southwest, the direction towards which the portable terminal device 100 faces is identified to be the most proximate one of the six directions.

In step 213, posture information of the portable terminal device 100 detected by the gyro sensor 172 is determined. That is, the posture information of the portable terminal device 100 refers to a rotation angle of the portable terminal device 100.For example, the identified rotation angle may be a case in which the screen of the touch screen 190 of the portable terminal device 100 is parallel or perpendicular to the sky. Assuming the rotation angles are preset in the portable terminal device 100 to be 0 degrees, 45 degrees, 90 degrees, 135 degrees, 180 degrees, 225 degrees, 270 degrees, and 315 degrees, a preset rotation angle which is most proximate to the detected rotation angle of the portable terminal device 100 is identified by using the posture information of the portable terminal device 100.

In step 215, an area of a light reflecting and shadowing effect, which will be applied to a preset icon, is determined according to direction and posture information determined in steps 211 and 213, respectively. The areas of the light reflecting and shadowing effect correspond to areas preset based on directions towards which the portable terminal device 100 faces and posture information of the portable terminal device 100. The light reflecting and shadowing effect corresponds to a graphic expression in which at least one of a color tone, a color, a vividness, and a transparency applied to a separate graphic layer or the same layer is applied at a predetermined ratio.

In step 217, the light reflecting effect according to the ratio of the brightness set in step 209 is displayed in a first area designated for the light reflecting effect and a preset shadowing effect is displayed in a second area designated for the shadowing effect.

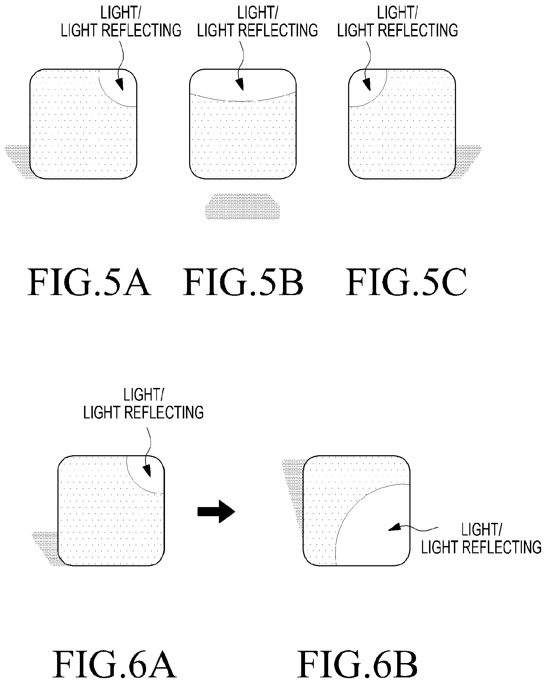

Referring to FIG. 5, when it is identified that the directions towards which the portable terminal device 100 faces are northeast, north, and northwest, preset areas are identified for the directions and the light reflecting effect and the shadowing effect are applied to those areas.

Referring to FIG. 6A, when it is identified that the direction towards which the portable terminal device 100 faces is northeast, the light reflecting effect and the shadowing effect are applied to a preset area corresponding that direction. Referring to FIG. 6B, when the identified direction towards which the portable terminal device 100 faces is northeast and an inclined angle, that is, the posture information of the portable terminal device 100 is identified, the light reflecting effect and the shadowing effect are applied to a preset area corresponding to the identified direction and posture.

Although the light reflecting effect and the shadowing effect of the icon are applied according to the direction towards which the portable terminal device 100 faces and the posture information of the portable terminal device 100 in the above-described embodiments, the light reflecting effect and the shadowing effect may be applied to the icon considering only the direction which the portable terminal device 100 faces. That is, the areas of the light reflecting and shadowing effect, which will be applied to the icon, may be preset areas corresponding to directions towards which the portable terminal device 100 faces irrespective of the posture of the portable terminal device 100.

Further, when the light reflecting effect and the shadowing effect are applied to the icon, at least one of the posture information of the portable terminal device 100, the current time information, and the sunrise and sunset time information of the area in which the portable terminal device 100 is located may be considered, together with the direction towards which the portable terminal device 100 faces. That is, the areas of the light reflecting and shadowing effect, which will be applied to the icon, may be preset areas for at least one information element of the posture information of the portable terminal device 100, the current time information, and the sunrise and sunset time information of the area in which the portable terminal device 100 is located, together with the direction towards which the portable terminal device 100 faces.

Further, weather information may be displayed on an object according to the identified weather information such as, for example, in the case of rainy or snowy weather. In more detail, the portable terminal device 100 may identify current weather information of the area in which the portable terminal device 100 is located, identify a weather preset in the portable terminal device 100, which corresponds to the identified current weather information of the area in which the portable terminal device 100 is located, and apply a graphic expression illustrating a weather effect according to a preset weather in at least one object. For example, when the current weather information of the area in which the portable terminal device 100 is located is identified to be rainy or snowy, a rainy or snowy image can be automatically displayed on the background screen to correspond to the identified weather information.

The screen display method of the portable terminal device 100 according to the embodiments of the present invention, and the configuration and operation of the device can be performed as described above. Meanwhile, although the present invention has been described with reference to the detailed embodiments, various embodiments or various modifications, additions, or deletions can be made

For example, the operations of steps 201 to 205 may be omitted according to an occasion in the above-described embodiment. Further, the operations of steps 207 and 209 may also be omitted in an embodiment, in which case a preset light reflecting effect is displayed in the light reflecting area, which will be applied to the icon in step 217.

Although an icon has been exemplified to describe a screen display operation of the portable terminal device 100 in the embodiments of the present invention, the screen display operation can be applied to all objects displayed on the screen of the portable terminal device 100, such as, for example, a widget, a text, and a background.

Further, the brightness ratio of the preset light reflecting effect, which will be applied to the icon of step 209, can be changed according to an amount of peripheral light measured in an interior instead of an exterior setting.

It is apparent that the embodiments of the present invention may be realized in hardware, software, or a combination of hardware and software. For example, arbitrary software may be stored in a volatile storage unit including a storage unit such as a ROM, a memory such as a RAM, a memory chip, a unit or an integrated circuit, and an optically or magnetically recordable and machine (for example, a computer)-readable storage medium such as a CD, a DVD, a magnetic disk or a magnetic tape, regardless of whether information can be erasable therefrom or re-recordable therein. It is evident that the memory that may be included in the image pickup apparatus is an example of a storage medium that can be read by a machine suitable for storing a program or programs including instructions realizing the embodiments of the present invention. Thus, the present invention includes a program including a code for realizing an apparatus or a method described in any of the following claims and a storage medium that can be read by a machine for storing such a program. Further, the program may be electronically fed though an arbitrary medium such as a communication signal transferred through a wired or wireless connection, and the present invention includes its equivalent.

While the present invention has been shown and described with reference to certain embodiments thereof, it will be understood by those skilled in the art that various changes in form and details may be made therein without departing from the scope of the present invention as defined by the appended claims.

## Claims

1. A screen display method of a portable terminal device (100), comprising:
determining sunrise and sunset time information of an area in which the portable terminal device (100) is located;
determining if a current time (203) is after the sunrise time and before the sunset time;
determining (211) direction information of the portable terminal device (100); and
applying (215) a graphic expression showing at least one of a preset shadowing effect and light reflecting effect, which are predefined in at least one object displayed on a screen (190) of the portable terminal device, according to the determined direction information, the determined current time, and the determined sunrise and sunset time information of the area in which the portable terminal device (100) is located.

2. The screen display method of claim 1, wherein the at least one object displayed on the screen (190) comprises at least one of an icon, a widget, a text, and a background.

3. The screen display method of claim 1, wherein the graphic expression is obtained by applying at least one of a color tone, a color, a vividness, and a transparency, which are applied to one of a separate graphic layer and the same layer, at a preset ratio.

4. The screen display method of claim 1, further comprising:
determining (213) a rotation angle of the portable terminal device (100); and
applying (215) a graphic expression showing at least one of the preset shadowing effect and light reflecting effect as a function of the determined direction information and the determined rotation angle of the portable terminal device (100).

5. The screen display method of claim 1, further comprising:
determining (201) current weather information of an area in which the portable terminal device (100) is located; and
applying a graphic expression showing at least one of the preset shadowing effect and light reflecting effect as a function of the determined direction information and the determined current weather information of the area.

6. The screen display method of claim 1, further comprising:
detecting an amount of peripheral light (207); and
changing (209) a graphic expression showing at least one of the preset shadowing effect and light reflecting effect, as a function of the detected amount of peripheral light.

7. A screen display apparatus of a portable terminal device (100), comprising:
a screen (190) configured to display at least one object;
a direction detection sensor (171) configured to detect direction information of the portable terminal device (100);
a GPS module (155) to determine the location of the portable device (100); and **characterised by** comprising:
a mobile communication module (120) to communicate with a server to identify sunrise and sunset time information of an area in which the portable terminal device (100) is located;
and
a controller (110) configured to control the screen and the direction detection sensor to control application of a graphic expression showing at least one of a preset shadowing effect and light reflecting effect in at least one object displayed on the screen according to the direction information, the current time of the portable terminal (100), and the sunrise and sunset time information of the area in which the portable terminal device (100) is located.

8. The screen display apparatus of claim 7, wherein the graphic expression is obtained by applying at least one of a color tone, a color, a vividness, and a transparency, which are applied to one of a separate graphic layer and the same layer, at a preset ratio.

9. The screen display apparatus of claim 7, further comprising a gyro sensor (172) that is configured to calculate a rotation angle value of the portable terminal device (100),
wherein the controller is configured to control the gyro sensor (172) and application of the graphic expression showing at least one of the preset shadowing effect and light reflecting effect to the at least one object, according to the detected direction information and the rotation angle value.

10. The screen display apparatus of claim 7, wherein the controller (110) is configured to determine a preset weather setting corresponding to current weather information of an area in which the portable terminal device (100) is located; and configured to apply a graphic expression showing at least one of the preset shadowing effect and light reflecting effect as a function of the determined direction information and the determined current weather information of the area.

11. The screen display apparatus of claim 7, further comprising an illumination sensor (173) configured to detect an amount of peripheral light,
wherein the controller is configured to control the illumination sensor (173), and is configured to control a change of the graphic expression showing at least one of the preset shadowing effect and light reflecting effect, as a function of an amount of peripheral light detected by the illumination sensor (173).

## Patentansprüche

1. Bildschirmanzeigeverfahren eines tragbaren Endgeräts (100), wobei das Verfahren Folgendes umfasst:
Ermitteln der Sonnenaufgangs- und der Sonnenuntergangszeitinformationen eines Gebiets in dem sich das tragbare Endgerät (100) befindet;
Ermitteln, ob ein aktueller Zeitpunkt (203) nach der Sonnenaufgangszeit und vor der Sonnenuntergangzeit liegt;
Ermitteln (211) der Richtungsinformation des tragbaren Endgerätes (100); und
Anwenden (215) eines graphischen Ausdrucks, der mindestens einen voreingestellten Schattierungseffekt oder einen Lichtreflexionseffekt zeigt, die in mindestens einem Objekt vordefiniert sind, das auf einem Bildschirm (190) des tragbaren Endgerätes gemäß den ermittelten Richtungsinformationen, der ermittelten aktuellen Zeit und den ermittelten Sonnenaufgangs- und Sonnenuntergangzeitinformationen des Bereichs angezeigt wird, in dem sich das tragbare Endgerät (100) befindet.

2. Bildschirmanzeigeverfahren nach Anspruch 1, wobei das mindestens ein Objekt, das auf dem Bildschirm (190) angezeigt wird, mindestens ein Symbol, ein Widget, einen Text oder einen Hintergrund umfasst.

3. Bildschirmanzeigeverfahren nach Anspruch 1, wobei der graphische Ausdruck durch Anwenden mindestens eines Farbtons, einer Farbe, einer Farbintensität und einer Transparenz erhalten wird, die auf eine separate graphische Schicht oder auf die gleiche Schicht in einem voreingestellten Verhältnis angewendet werden.

4. Bildschirmanzeigeverfahren nach Anspruch 1, das ferner Folgendes umfasst:
Ermitteln (213) eines Drehwinkels des tragbaren Endgerätes (100); und
Anwenden (215) eines graphischen Ausdrucks, der mindestens den voreingestellten Schattierungseffekt oder den Lichtreflexionseffekt in Abhängigkeit von den ermittelten Richtungsinformationen und des ermittelten Drehwinkels des tragbaren Endgerätes (100) zeigt.

5. Bildschirmanzeigeverfahren nach Anspruch 1, das ferner Folgendes umfasst:
Ermitteln (201) der aktuellen Wetterinformationen eines Bereichs in dem sich das tragbare Endgerät (100) befindet und
Anwenden eines graphischen Ausdrucks, der mindestens den voreingestellten Schattierungseffekt oder den Lichtreflexionseffekt in Abhängigkeit von den ermittelten Richtungsinformationen und den ermittelten aktuellen Wetterinformationen des Gebietes zeigt.

6. Bildschirmanzeigeverfahren nach Anspruch 1, das ferner Folgendes umfasst:
Erfassen einer Menge von peripherem Licht (207); und
Ändern (209) eines graphischen Ausdrucks, der mindestens den voreingestellten Schattierungseffekt oder den Lichtreflexionseffekt in Abhängigkeit von der erfassten Menge an peripherem Licht zeigt.

7. Bildschirmanzeigevorrichtung eines tragbaren Endgeräts (100), wobei die Vorrichtung Folgendes umfasst:
einen Bildschirm (190), der dafür konfiguriert ist, mindestens ein Objekt anzuzeigen;
einen Richtungserfassungssensor (171), der dafür konfiguriert ist, Richtungsinformationen des tragbaren Endgerätes (100) zu erfassen;
ein GPS-Modul (155) zur Ermittlung der Position der tragbaren Vorrichtung (100);
und wobei die Vorrichtung durch Folgendes gekennzeichnet ist:
ein mobiles Kommunikationsmodul (120), das mit einem Server kommuniziert, um Sonnenaufgangs- und der Sonnenuntergangszeitinformationen eines Gebiets zu identifizieren, in dem sich das tragbare Endgerät (100) befindet;
und
eine Steuerung (110), die dafür konfiguriert ist, den Bildschirm und den Richtungserfassungssensor so zu steuern, um das Anwenden (215) eines graphischen Ausdrucks zu steuern, der mindestens einen voreingestellten Schattierungseffekt oder einen Lichtreflexionseffekt in mindestens einem Objekt zeigt, das auf dem Bildschirm gemäß den Richtungsinformationen, der aktuellen Zeit des tragbaren Endgeräts (100) und den Sonnenaufgangs- und Sonnenuntergangzeitinformationen des Bereichs angezeigt wird, in dem sich das tragbare Endgerät (100) befindet.

8. Bildschirmanzeigevorrichtung nach Anspruch 7, wobei der graphische Ausdruck durch Anwenden mindestens eines Farbtons, einer Farbe, einer Farbintensität und einer Transparenz erhalten wird, die auf eine separate graphische Schicht oder auf die gleiche Schicht in einem voreingestellten Verhältnis angewendet werden.

9. Bildschirmanzeigevorrichtung nach Anspruch 7, die ferner einen Gyrosensor (172) umfasst, der dafür konfiguriert ist, einen Drehwinkelwert des tragbaren Endgerätes (100) zu berechnen,
wobei die Steuerung dafür konfiguriert ist, den Gyrosensor (172) und die Anwendung des graphischen Ausdrucks, der mindestens den voreingestellten Schattierungseffekt oder den Lichtreflexionseffekt für das mindestens eine Objekt zeigt, gemäß den erfassten Richtungsinformationen und dem Drehwinkelwert zu steuern.

10. Bildschirmanzeigevorrichtung nach Anspruch 7, wobei die Steuerung (110) dafür konfiguriert ist, eine voreingestellte Wettereinstellung zu ermitteln, die aktuellen Wetterinformationen eines Bereichs entspricht, in dem sich das tragbare Endgerät (100) befindet; und die Steuerung dafür konfiguriert ist, einen graphischen Ausdruck anzuwenden, der mindestens den voreingestellten Schattierungseffekt oder den Lichtreflexionseffekt in Abhängigkeit von den ermittelten Richtungsinformationen und den ermittelten aktuellen Wetterinformationen des Gebietes zeigt.

11. Bildschirmanzeigevorrichtung nach Anspruch 7, die ferner einen Beleuchtungssensor (173) umfasst, der dafür konfiguriert ist, eine Menge an peripherem Licht zu erfassen,
wobei die Steuerung dafür konfiguriert ist, den Beleuchtungssensor (173) zu steuern, und dafür konfiguriert ist, eine Änderung des graphischen Ausdrucks zu steuern, der mindestens einen voreingestellten Schattierungseffekt oder einen Lichtreflexionseffekt in Abhängigkeit von einer Menge an peripherem Licht, die von dem Beleuchtungssensor (173) erfasst wird, zeigt.

## Revendications

1. Un procédé d'affichage d'écran d'un dispositif terminal portatif (100), comprenant :
la détermination d'informations d'heures de lever et de coucher du soleil d'une zone dans laquelle le dispositif terminal portatif (100) est situé,
la détermination si une heure actuelle (203) se situe après l'heure de lever du soleil et avant l'heure de coucher du soleil,
la détermination (211) d'informations de direction du dispositif terminal portatif (100), et
l'application (215) d'une expression graphique illustrant au moins un effet parmi un effet d'ombrage et un effet de réflexion de la lumière prédéfinis qui sont prédéfinis dans au moins un objet affiché sur un écran (190) du dispositif terminal portatif en fonction des informations de direction déterminées, de l'heure actuelle déterminée et des informations d'heures de lever et de coucher du soleil déterminées de la zone dans laquelle le dispositif terminal portatif (100) est situé.

2. Le procédé d'affichage d'écran selon la Revendication 1, où le au moins un objet affiché sur l'écran (190) comprend au moins un élément parmi une icône, un gadget logiciel, un texte et un arrière-plan.

3. Le procédé d'affichage d'écran selon la Revendication 1, où l'expression graphique est obtenue par l'application d'au moins un élément parmi une tonalité chromatique, une couleur, une vivacité et une transparence qui sont appliquées à une couche parmi une couche graphique distincte et la même couche à un rapport prédéfini.

4. Le procédé d'affichage d'écran selon la Revendication 1, comprenant en outre :
la détermination (213) d'un angle de rotation du dispositif terminal portatif (100), et
l'application (215) d'une expression graphique illustrant au moins un effet parmi l'effet d'ombrage et l'effet de réflexion de la lumière prédéfinis sous la forme d'une fonction des informations de direction déterminées et de l'angle de rotation déterminé du dispositif terminal portatif (100).

5. Le procédé d'affichage d'écran selon la Revendication 1, comprenant en outre :
la détermination (201) d'informations météorologiques actuelles d'une zone dans laquelle le dispositif terminal portatif (100) est situé, et
l'application d'une expression graphique illustrant au moins un effet parmi l'effet d'ombrage et l'effet de réflexion de la lumière prédéfinis sous la forme d'une fonction des informations de direction déterminées et des informations météorologiques actuelles déterminées de la zone.

6. Le procédé d'affichage d'écran selon la Revendication 1, comprenant en outre :
la détection d'une quantité d'une lumière périphérique (207), et
la modification (209) d'une expression graphique illustrant au moins un effet parmi l'effet d'ombrage et l'effet de réflexion de la lumière prédéfinis sous la forme d'une fonction de la quantité détectée de lumière périphérique.

7. Un appareil d'affichage d'écran d'un dispositif terminal portatif (100), comprenant :
un écran (190) configuré de façon à afficher au moins un objet,
un capteur de détection de direction (171) configuré de façon à détecter des informations de direction du dispositif terminal portatif (100),
un module GPS (155) destiné à la détermination de l'emplacement du dispositif portatif (100),
et **caractérisé en ce qu'**il comprend :
un module de communication mobile (120) destiné à communiquer avec un serveur de façon à identifier des informations d'heures de lever et de coucher du soleil d'une zone dans laquelle le dispositif terminal portatif (100) est situé,
et
un dispositif de commande (110) configuré de façon à commander l'écran et le capteur de détection de direction de façon à commander l'application d'une expression graphique illustrant au moins un effet parmi un effet d'ombrage et un effet de réflexion de la lumière prédéfinis dans au moins un objet affiché sur l'écran en fonction des informations de direction, de l'heure actuelle du terminal portatif (100) et des informations d'heures de lever et de coucher du soleil de la zone dans laquelle le dispositif terminal portatif (100) est situé.

8. L'appareil d'affichage d'écran selon la Revendication 7, où l'expression graphique est obtenue par l'application d'au moins un élément parmi une tonalité chromatique, une couleur, une vivacité et une transparence qui sont appliquées à une couche parmi une couche graphique distincte et la même couche à un rapport prédéfini.

9. L'appareil d'affichage d'écran selon la Revendication 7, comprenant en outre un capteur gyroscopique (172) qui est configuré de façon à calculer une valeur d'angle de rotation du dispositif terminal portatif (100),
où le dispositif de commande est configuré de façon à commander le capteur gyroscopique (172) et à appliquer l'expression graphique illustrant au moins un effet parmi l'effet d'ombrage et l'effet de réflexion de la lumière prédéfinis au au moins un objet en fonction des informations de direction détectées et de la valeur d'angle de rotation.

10. L'appareil d'affichage d'écran selon la Revendication 7, où le dispositif de commande (110) est configuré de façon à déterminer un réglage météorologique prédéfini correspondant à des informations météorologiques actuelles d'une zone dans laquelle le dispositif terminal portatif (100) est situé, et configuré de façon à appliquer une expression graphique illustrant au moins un effet parmi l'effet d'ombrage et l'effet de réflexion de la lumière prédéfinis sous la forme d'une fonction des informations de direction déterminées et des informations météorologiques actuelles déterminées de la zone.

11. L'appareil d'affichage d'écran selon la Revendication 7, comprenant en outre un capteur d'éclairage (173) configuré de façon à détecter une quantité de lumière périphérique,
où le dispositif de commande est configuré de façon à commander le capteur d'éclairage (173) et est configuré de façon à commander une modification de l'expression graphique illustrant au moins un effet parmi l'effet d'ombrage et l'effet de réflexion de la lumière prédéfinis sous la forme d'une fonction d'une quantité de lumière périphérique détectée par le capteur d'éclairage (173).
